# EUROPÄISCHE PATENTSCHRIFT

(11) **EP 2 802 754 B1**
(45) Veröffentlichungstag und Bekanntmachung des Hinweises auf die Patenterteilung: **27.07.2016**
(21) Anmeldenummer: 13705384.9
(22) Anmeldetag: 11.01.2013
(51) Int. Cl.: F01N 3/021, F01N 3/035, F01N 3/10, F01N 3/20, F01N 13/00, F01N 13/02, F02B 37/00

(54) **MOTORBLOCK-ANORDNUNG MIT EINEM ABGASSYSTEM**
CYLINDER BLOCK ARRANGEMENT WITH AN EXHAUST GAS SYSTEM
AGENCEMENT DE BLOC MOTEUR AVEC SYSTÈME D'ÉCHAPPEMENT

(30) Priorität: 14.01.2012 DE 102012000591
(43) Veröffentlichungstag der Anmeldung: 19.11.2014
(73) Patentinhaber: Daimler AG, 70327 Stuttgart (DE)
(72) Erfinder: SPENGEL, Christoph, 72669 Unterensingen (DE); PEPE, Antonio, 70195 Stuttgart (DE); RAITSCHEV, Peter, 70190 Stuttgart (DE); MÜLLER, Jutta, Elisabeth, 71229 Leonberg-Warmbronn (DE); SCHUBERT, Clemens, 73262 Reichenbach (DE)
(74) Vertreter: JENSEN & SON
(86) Internationale Anmeldenummer: PCT/EP2013/000066
(87) Internationale Veröffentlichungsnummer: WO 2013/104543

(56) Entgegenhaltungen:
- EP-A1- 1 162 098
- EP-A1- 2 522 822
- WO-A2-2011/087819

## Beschreibung

Die Erfindung betrifft eine Motorblock-Anordnung mit einem Abgassystem gemäß Oberbegriff des Anspruchs 1.

Es sind bereits Motorblock-Anordnungen bekannt, bei welchen Komponenten des Abgassystems nahe an einem Motorblock angeordnet sind. Aus dem Artikel MTZ, 10, 2011, Seiten 763 bis 768 geht eine Motorblock-Anordnung mit einem Abgassystem hervor, wobei das Abgassystem des Verbrennungsmotors, hier eines Dieselmotors, einen Oxidationskatalysator und einen Partikelfilter umfasst. Beide Elemente sind gemeinsam in einem Gehäuse an einer Seite des Motorblocks angeordnet. Dies hat den Vorteil, dass sie sehr rasch ihre Betriebstemperatur erreichen, und dass über eine längere Wegstrecke vom Motor bis zu den Komponenten auftretende Temperaturverluste des Abgases gering gehalten werden können. Das bekannte Abgassystem weist lediglich zwei motornah angeordnete abgasreinigungsaktive Komponenten auf. Bei komplexeren Abgassystemen, insbesondere solchen mit einem zusätzlichen Katalysator für eine selektive katalytische Reaktion (SCR-Katalysator) ist eine motornahe Anordnung aus Bauraumgründen typischerweise nicht möglich. Ein SCR-Katalysator wird eingesetzt, um Stickoxide (NOx) insbesondere im Abgas von Verbrennungsmotoren des Dieseltyps zu reduzieren. Hierzu wird im Bereich einer Mischstrecke eine Harnstoff-Wasser-Lösung in den Abgasstrom eingebracht, wobei die Mischstrecke zum einen dazu dient, die Harnstoff-Wasser-Lösung innig mit dem Abgas zu vermischen, zum anderen aber auch als Reaktionsstrecke, entlang derer der Harnstoff mit dem Wasser zu Ammoniak und Kohlendioxid reagiert. Das Ammoniak wiederum reagiert in dem SCR-Katalysator mit den Stickoxiden des Abgasstroms, sodass deren Konzentration herabgesetzt wird. Um die Funktion der Mischstrecke zu gewährleisten, muss diese eine gewisse Länge aufweisen. Daher wird der SCR-Katalysator typischerweise in einem Fahrzeugunterbodenbereich angeordnet, um einen ausreichend langen Weg für den Abgasstrom von dem Motorblock bis zu dem SCR-Katalysator bereitzustellen. Dies hat den Nachteil, dass Temperatur- und Druckverluste im Abgasstrom auftreten. Eine Sensorik für die Zugabe der Harnstoff-Wasser-Lösung sowie den SCR-Katalysator muss zudem aufwändig angeordnet und an die Fahrzeugelektronik angebunden werden. Im Übrigen ist die Anordnung der Komponenten im Fahrzeugunterbodenbereich abhängig vom Fahrzeugtyp, sodass eine hohe Anzahl von Abgasanlagenvarianten erforderlich ist, was logistische Probleme und hohe Kosten verursacht.

Aus der EP 2 123 878 A1 ist eine kompakte Anordnung eines Partikelfilters und eines SCR-Katalysators bekannt, wobei der Partikelfilter mit dem SCR-Katalysator über eine Rohrleitung verbunden ist, die im Wesentlichen S-förmig verläuft. Dies ermöglicht eine kompakte Anordnung der Komponenten nebeneinander bei einer zugleich ausreichend langen Mischstrecke zwischen denselben. Gleichwohl ist auch diese für sich genommen kompakte Anordnung im Fahrzeugunterbodenbereich vorgesehen, sodass sich die entsprechenden Nachteile ergeben.

Aus der EP 2 522 822A1 ist eine kompakte Anordnung eines Turboladers, eines Oxidationskatalysators, eines Partikelfilters und eines SCR-Katalysators bekannt. Diese Anordnung verläuft nicht näher spezifiziert S-förmig seitlich am Zylinderblock eines Verbrennungsmotors. Das Dokument ist gemäß Artikel 54(3) EPÜ nur für eine Neuheitsbetrachtung relevant.

Aufgabe der Erfindung ist es daher, eine Motorblock-Anordnung mit einem Abgassystem zu schaffen, welche die genannten Nachteile nicht aufweist. Insbesondere sollen Temperatur- und Druckverluste in dem Abgasstrom so weit als möglich vermieden werden, eine Anbindung und Anordnung von Sensorik insbesondere im Bereich des SCR-Katalysators soll vereinfacht werden, und die Anordnung soll unabhängig vom Fahrzeugtyp realisierbar sein, sodass eine Anzahl an Varianten, die vorgehalten werden müssen, deutlich reduziert wird.

Die Aufgabe wird gelöst, indem eine Motorblock-Anordnung mit einem Motorblock und einem Abgassystem gemäß Anspruch 1 geschaffen wird. Dabei umfasst das Abgas-system - in Strömungsrichtung eines Abgasstroms gesehen - folgende, hintereinander angeordnete Komponenten: Einen Abgasturbolader, einen Oxidationskatalysator, eine Zugabeeinrichtung für Harnstoff-Wasser-Lösung, einen Partikelfilter und einen SCR-Katalysator. Der Motor ist als Verbrennungsmotor ausgebildet, vorzugsweise als Dieselmotor. Die Motorblock-Anordnung zeichnet sich dadurch aus, dass der Abgasturbolader, der Oxidationskatalysator, die Zugabeeinrichtung für Harnstoff-Wasser-Lösung, der Partikelfilter und der SCR-Katalysator gemeinsam entlang einer Seite des Motorblocks an demselben angeordnet sind. Dabei ist die Seite, an der die Komponenten des Abgassystems angeordnet sind, im Wesentlichen senkrecht zu einer Abtriebseite des Motorblocks orientiert. Der Begriff Abtriebseite spricht die Seite des Motorblocks an, an welcher ein Getriebe angeordnet wird. Ist der Verbrennungsmotor als Dieselmotor ausgebildet, ist der Oxidationskatalysator bevorzugt als Diesel-Oxidationskatalysator ausgebildet. Entsprechend ist der Partikelfilter bevorzugt als Diesel-Partikelfilter ausgebildet. Durch die gemeinsame Anordnung der Komponenten des Abgassystems an ein und derselben Seite des Motorblocks sind diese sehr nah beieinander und motornah angeordnet, sodass sie von der Abwärme des Motors erwärmt werden, also rasch ihre Betriebstemperatur erreichen und halten. Außerdem werden insbesondere infolge der resultierenden geringen Leitungslängen Temperatur- und Druckverluste in dem Abgasstrom weitgehend vermieden. Die Anordnung ist unabhängig von dem konkreten Fahrzeugtyp, weil das Abgassystem quasi gemeinsam mit dem Motorblock als Baugruppe ausgebildet ist. Es kann also vollständig gemeinsam mit diesem in einem Motorraum des Fahrzeugs untergebracht werden. Keine der genannten Komponenten des Abgassystems wird in dem Bereich eines Fahrzeugunterbodens untergebracht. Durch die gemeinsame Anordnung aller Komponenten an einer Seite des Motorblocks ist auch eine Anordnung und Anbindung der Sensorik für das Abgassystem wesentlich vereinfacht.

Es wird auch eine Motorblock-Anordnung bevorzugt, die sich dadurch auszeichnet, dass der Partikelfilter und der SCR-Katalysator gemeinsam in einem Behälter angeordnet sind. Der Behälter wird auch als Kombibox bezeichnet und ist typischerweise als Stahlblechgehäuse mit einem Einlasstrichter für die Zufuhr von Abgas in das Gehäuse und einem Auslasstrichter zur Ableitung von gereinigtem Abgas aus dem Gehäuse ausgebildet. Durch die eng benachbarte Anordnung in einem gemeinsamen Gehäuse werden insbesondere Temperatur- und Druckverluste zwischen dem Partikelfilter und dem SCR-Katalysator weitestgehend vermieden.

Es wird weiter eine Motorblock-Anordnung bevorzugt, die sich dadurch auszeichnet, dass der Partikelfilter Eintrittskanäle und Austrittskanäle aufweist, wobei Wandungen der Eintrittskanäle eine Beschichtung für eine selektive katalytische Reaktion, also eine SCR-Katalysatorbeschichtung, aufweisen. Bevorzugt weisen auch Wandungen der Austrittskanäle eine SCR-Katalysatorbeschichtung auf. Hierdurch kann bereits der Partikelfilter eine selektive katalytische Wirkung insbesondere in Bezug auf eine Stickoxidreduktion entfalten. Diese zusätzlich zur NOx-Verminderung des nachgeschalteten SCR-Katalysators erfolgende NOx-Verminderung ermöglicht besonders niedrige NOx-Emissionswerte

Es wird eine Motorblock-Anordnung bevorzugt, die sich dadurch auszeichnet, dass die in Anspruch 1 genannten Komponenten des Abgassystems so relativ zueinander angeordnet sind, dass der Abgasstrom von einem Austritt aus dem Abgasturbolader bis zu einem Austritt aus dem SCR-Katalysator mindestens eine Umlenkung der Hauptabgasströmungsrichtung um etwa 180° erfährt. Ist genau eine Umlenkung um etwa 180° vorgesehen, wird vorzugsweise die Länge des Motorblocks zweifach genutzt, um die Komponenten des Abgassystems an demselben anzuordnen. Sind zwei Umlenkungen um etwa 180° vorgesehen, wird diese Länge entsprechend dreifach genutzt. Entsprechend ist es auch möglich, mehr als zwei Umlenkungen um 180° vorzusehen. Durch die Anzahl der Umlenkungen ist es insbesondere möglich, die Anordnung der Komponenten des Abgassystems, also des Abgasturboladers, des Oxidationskatalysators, der Zugabeeinrichtung für die Harnstoff-Wasser-Lösung, des Partikelfilters und des SCR-Katalysators, auf einen konkreten Motorblock, und ganz besonders auf dessen Länge abzustimmen. So ist es bei einem Motorblock mit größerer Baulänge ausreichend, nur eine Umlenkung um etwa 180° vorzusehen. Steht eine geringere Baulänge zu Verfügung, können beispielsweise zwei oder auch mehr Umlenkungen um etwa 180° vorgesehen sein.

Es wird auch eine Motorblock-Anordnung bevorzugt, die sich dadurch auszeichnet, dass der Abgasturbolader und der Oxidationskatalysator durch eine Rohrleitung miteinander verbunden sind, welche im Wesentlichen in Längsrichtung des Motorblocks verläuft. Dabei spricht eine Längsrichtung die Richtung des Motorblocks an, die von der Abtriebseite desselben zu einer dieser abgewandten Seite verläuft. Die der Abtriebseite des Motorblocks abgewandte Seite wird auch als Schwingungsdämpferseite bezeichnet, weil hier vorzugsweise ein Schwingungsdämpfer vorgesehen ist. Wird im Folgenden der Begriff Schwingungsdämpferseite verwendet, ist dies nicht einschränkend so zu verstehen, dass zwingend ein Schwingungsdämpfer an dieser Seite vorgesehen sein muss. Der Begriff wird stattdessen kurz für die der Abtriebseite des Motorblocks abgewandte Seite verwendet. Bei der Motorblock-Anordnung ist eine Strömungslänge für das Abgas von einem Abgasturbolader-Austritt bis zu einem Oxidationskatalysator-Eintritt weniger als 300 mm lang. Bevorzugt beträgt sie 200 mm.

Es wird eine Motorblock-Anordnung bevorzugt, die sich dadurch auszeichnet, dass der Oxidationskatalysator und der Partikelfilter durch eine Rohrleitung miteinander verbunden und so relativ zueinander angeordnet sind, dass der Abgasstrom von einem Oxidationskatalysator-Austritt bis zu einem Partikelfilter-Eintritt eine Umlenkung von im Wesentlichen 90° erfährt. Dies ist insbesondere dann vorgesehen, wenn eine relativ große Baulänge für die Komponenten des Abgassystems zur Verfügung steht. Ganz besonders ist dies dann der Fall, wenn der Motorblock in einem Fahrzeug in Längsrichtung eingebaut wird. Steht eine geringere Baulänge zur Verfügung, was insbesondere der Fall sein kann, wenn der Motorblock quer eingebaut wird, ist vorzugsweise vorgesehen, dass der Abgasstrom von einem Oxidationskatalysator-Austritt bis zu einem Partikelfilter-Eintritt eine Umlenkung von zweimal im Wesentlichen 180° erfährt. Der Abgasstrom wird dann also nach seinem Austritt aus dem Oxidationskatalysator einmal um 180° umgelenkt, vorzugsweise eine gewisse Strecke zurückgeführt und schließlich ein zweites Mal um 180° umgelenkt, sodass er im Wesentlichen in der gleichen Richtung in den Partikelfilter eintritt, in welcher er auch in den Oxidationskatalysator eingetreten ist.

Es wird auch eine Motorblock-Anordnung bevorzugt, die sich dadurch auszeichnet, dass die Rohrleitung zwischen dem Oxidationskatalysator und dem Partikelfilter eine Mischstrecke umfasst, entlang welcher die Zugabeeinrichtung für Harnstoff-Wasser-Lösung und vorzugsweise eine insbesondere statische Mischvorrichtung angeordnet ist/sind. Die Mischvorrichtung dient einer innigen Durchmischung der Harnstoff-Wasser-Lösung mit dem Abgasstrom. Die Rohrleitung zwischen dem Oxidationskatalysator und dem Partikelfilter ist bevorzugt hinreichend lang ausgebildet, um eine wenigstens annähernd vollständige Thermolyse und/oder Hydrolyse des ins Abgas eingebrachten Harnstoffs zu ermöglichen.

Es wird eine Motorblock-Anordnung bevorzugt, die sich dadurch auszeichnet, dass der Abgasturbolader im Wesentlichen, vorzugsweise vollständig oberhalb eines Abgaskrümmers angeordnet ist. Hierdurch wird zusätzlich Bauraum für die Anordnung des Abgassystems an dem Motorblock gewonnen.

Auch wird eine Motorblock-Anordnung bevorzugt, die sich dadurch auszeichnet, dass der Oxidationskatalysator im Wesentlichen oberhalb des Abgaskrümmers angeordnet ist. Insbesondere wenn dieser in etwa auf Höhe des Abgasturboladers angeordnet ist, kann eine Verbindung zwischen diesen Elementen möglichst kurz gehalten werden.

Auch wird eine Motorblock-Anordnung bevorzugt, die sich dadurch auszeichnet, dass der Partikelfilter und der SCR-Katalysator im Wesentlichen unterhalb des Abgaskrümmers und im Wesentlichen, vorzugsweise vollständig oberhalb eines Motorträgers, sowie vorzugsweise annährend zentrisch relativ zu dem Abgasturbolader, angeordnet sind. In der bevorzugten Ausführungsform ist der Abgasturbolader somit in einer Draufsicht annähernd mittig in Bezug auf die vorzugsweise eng benachbart in einem gemeinsamen Gehäuse angeordneten Komponenten Partikelfilter und SCR-Katalysator angeordnet. Hierdurch wird ein Bauraum an der Seite des Motorblocks optimal ausgenutzt, und die Komponenten kollidieren nicht mit dem Motorträger.

Es wird auch eine Motorblock-Anordnung bevorzugt, die sich dadurch auszeichnet, dass der Abgasturbolader näher an der Abtriebseite des Motorblocks als an der Schwingungsdämpferseite desselben angeordnet ist, wobei der Oxidationskatalysator näher an der Schwingungsdämpferseite als an der Abtriebseite angeordnet ist. Insbesondere wenn nur eine Umlenkung des Abgasstroms um 180° vorgesehen ist, garantiert dies eine besonders platzsparende und günstige Führung des Abgasstroms und damit Anordnung der Komponenten des Abgassystems. Ganz besonders wenn der Motorblock - in Fahrzeugrichtung gesehen - längs eingebaut ist, ist ein Austritt aus dem SCR-Katalysator in diesem Fall zum Fahrzeugheck hin ausgerichtet. Es muss dann keine zusätzliche Umlenkung des Abgasstroms, stromabwärts des SCR-Katalysators vorgesehen sein.

Es wird auch eine Motorblock-Anordnung bevorzugt, die sich dadurch auszeichnet, dass der Abgasturbolader und der Oxidationskatalysator so relativ zueinander angeordnet sind, dass der Abgasstrom von einem Abgasturbolader-Austritt bis zu einem Oxidationskatalysator-Eintritt eine Umlenkung von im Wesentlichen 90° erfährt. Dabei ist der Abgasturbolader vorzugsweise in Längsrichtung des Motorblocks ausgerichtet, also im Wesentlichen waagerecht angeordnet. Der Oxidationskatalysator wird dann vorzugsweise von dem Abgas in einer Richtung durchströmt, die im Wesentlichen senkrecht auf der Längsrichtung des Motorblocks und vorzugsweise zu einer Unterseite desselben hin ausgerichtet ist. Die Abgasströmung durch den Oxidationskatalysator erfolgt bevorzugt auch relativ zu dem Fahrzeug gesehen, in welches der Motorblock eingebaut ist, von oben nach unten.

Es wird auch eine Motorblock-Anordnung bevorzugt, die sich dadurch auszeichnet, dass der Abgasturbolader näher an der Schwingungsdämpferseite des Motorblocks als an dessen Abtriebseite angeordnet ist. Der Oxidationskatalysator ist dann näher an der Abtriebseite als an der Schwingungsdämpferseite angeordnet. Diese Anordnung wird insbesondere dann bevorzugt, wenn eine geringere Baulänge zur Verfügung steht, sodass eine Umlenkung des Abgasstroms um zweimal 180° nötig sein kann. Dies kann insbesondere dann der Fall sein, wenn der Motorblock - in Richtung des Fahrzeugs gesehen - quer eingebaut wird. Es ist aber auch möglich, die beschriebene Anordnung bei einem Längseinbau zu realisieren, insbesondere wenn wenig Bauraum zur Verfügung steht. In diesem Fall verlässt auch bei dieser Anordnung aufgrund der zweimaligen Umlenkung des Abgasstroms um 180° derselbe den SCR-Katalysator zum Fahrzeugheck hin, sodass keine weitere Umlenkung nötig ist.

Es wird eine Motorblock-Anordnung bevorzugt, die sich dadurch auszeichnet, dass der Oxidationskatalysator relativ zu der Mischstrecke und die Mischstrecke relativ zu dem Partikelfilter so angeordnet sind, dass der Abgasstrom von einem Oxidationskatalysator-Austritt zu einem Eintritt in die Mischstrecke eine Umlenkung von im Wesentlichen 180° erfährt, wobei er von einem Austritt aus der Mischstrecke bis zu einem Eintritt in den Partikelfilter eine Umlenkung von im Wesentlichen 180° erfährt. Es sind dann also zwei Umlenkungen des Abgasstroms um 180° vorgesehen, wobei quasi eine S-förmige Verbindung von dem Oxidationskatalysator zu dem Partikelfilter vorgesehen ist, welche die Mischstrecke umfasst. Diese ist demnach so zwischen dem Oxidationskatalysator und dem Partikelfilter angeordnet, dass das Abgas durch sie - in Längsrichtung gesehen - quasi zurückströmt, wobei der Oxidationskatalysator einerseits und der Partikelfilter andererseits in der gleichen Richtung durchströmt werden, während die Mischstrecke in der entgegengesetzten Richtung durchströmt wird. Wie bereits ausgeführt, eignet sich eine solche Anordnung der Komponenten des Abgassystems insbesondere für Einbausituationen mit beschränktem Bauraum beziehungsweise beschränkter Baulänge. Dies kann typischerweise der Fall sein, wenn der Motorblock - in Fahrzeugrichtung gesehen - quer eingebaut wird.

Schließlich wird eine Motorblock-Anordnung bevorzugt, die sich dadurch auszeichnet, dass der Partikelfilter und der SCR-Katalysator im Wesentlichen unterhalb des Abgasturboladers und auch im Wesentlichen unterhalb des Oxidationskatalysators angeordnet sind. Dies bedeutet eine besonders kompakte Anordnung der Komponenten, wobei diese sinnvollerweise nah aneinander angeordnet sind, um Temperatur- und Druckverluste zu minimieren. Bevorzugt sind sie paarweise, nämlich nebeneinander angeordnet, der Abgasturbolader und der Oxidationskatalysator einerseits, und der Partikelfilter und der SCR-Katalysator andererseits.

Die Erfindung wird im Folgenden anhand der Zeichnung näher beschrieben. Dabei zeigen:
- Figur 1: eine schematische Ansicht eines Ausführungsbeispiels einer Motorblock-Anordnung mit Abgassystem bei größerer Baulänge, und
- Figur 2: ein zweites Ausführungsbeispiel eines Abgassystems bei kleinerer Baulänge.

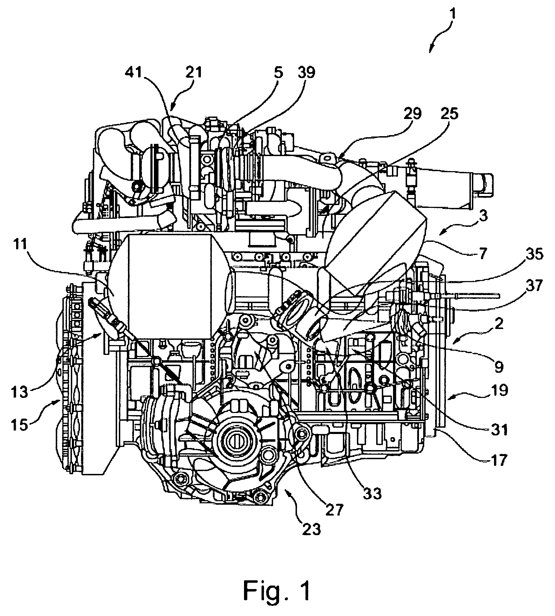

Figur 1 zeigt eine schematische Ansicht eines ersten Ausführungsbeispiels einer Motorblock-Anordnung 1 mit einem Motorblock 2 und einem Abgassystem 3. Dieses umfasst - in Strömungsrichtung eines Abgasstroms von dem Motorblock 2 zu einem nicht dargestellten Auspuff gesehen - hintereinander angeordnet einen Abgasturbolader 5, einen Oxidationskatalysator 7, eine Zugabeeinrichtung 9 für Harnstoff-Wasser-Lösung, einen Partikelfilter und einen SCR-Katalysator, welche hier gemeinsam in einem auch als Kombibox bezeichneten Behälter 11 angeordnet sind, sowie eine Trennstelle 13 zum Anschluss einer nicht dargestellten Rohrverbindung, welche zu einem ebenfalls nicht dargestellten Schalldämpfer und letztlich zu einem Auspuff führt. Vorzugsweise ist unmittelbar im Anschluss an die Trennstelle 13 ein nicht dargestelltes Entkopplungselement vorgesehen, um die - in Strömungsrichtung des Abgases gesehen - hinter den in Figur 1 dargestellten Komponenten des Abgassystems 3 angeordneten Teile von diesen schwingungszuentkoppeln.

Der Abgasturbolader 5, der Oxidationskatalysator 7, die Zugabeeinrichtung 9, der Partikelfilter und der SCR-Katalysator sind gemeinsam entlang einer in Figur 1 dem Betrachter zugewandten Seite des Motorblocks 2 an demselben angeordnet. Diese Seite steht im Wesentlichen senkrecht zu einer Abtriebseite 15, welche vorzugsweise mit einem Getriebe in Wirkverbindung bringbar ist. Auf einer der Abtriebseite 15 abgewandten Seite weist der hier dargestellte Motorblock 2 einen Schwingungsdämpfer 17 auf. Daher wird die der Abtriebseite 15 abgewandte Seite auch als Schwingungsdämpferseite 19 bezeichnet. Diese Bezeichnung soll nicht bedeuten, dass der Motorblock 2 zwingend einen Schwingungsdämpfer 17 umfassen muss. Die Bezeichnung dient - ohne jegliche Beschränkung - lediglich als Kurzform zur Benennung der Seite des Motorblocks 2, welche der Abtriebseite 15 abgewandt ist. Eine Längsrichtung des Motorblocks 2 erstreckt sich von der Abtriebseite 15 zu der Schwingungsdämpferseite 19. Damit zeigt sich, dass sich auch das Abgassystem 3 im Wesentlichen in Längsrichtung des Motorblocks 2 entlang demselben erstreckt. Es ist möglich, den Motorblock 2 - in Richtung eines Kraftfahrzeugs gesehen - längs in dieses einzubauen. Dies wird als Längseinbau bezeichnet. Hierbei sind die Längsrichtung des Motorblocks 2 und die Längsrichtung des Kraftfahrzeugs parallel zueinander orientiert. Es ist auch möglich, den Motorblock 2 - in Längsrichtung eines Kraftfahrzeugs gesehen - quer in dieses einzubauen. Dies wird als Quereinbau bezeichnet. In diesem Fall ist die Längsrichtung des Motorblocks 2 senkrecht zur Längsrichtung des Kraftfahrzeugs orientiert. Der Motorblock 2 weist eine Oberseite 21 und eine Unterseite 23 auf. Bei einem Einbau in ein Kraftfahrzeug ist die Oberseite 21 nach oben orientiert, während die Unterseite 23 nach unten orientiert ist.

Ist der Motorblock 2 längs in ein Kraftfahrzeug eingebaut, weist typischerweise die Abtriebseite 15 zum Heck des Fahrzeugs. Ist er dagegen quer eingebaut, weist die Abtriebseite 15 typischerweise - in Fahrtrichtung gesehen - nach links beziehungsweise - zumindest in Mitteleuropa - zu einer Fahrerseite des Kraftfahrzeugs hin.

Bei dem in Figur 1 dargestellten Ausführungsbeispiel ist der Abgasturbolader 5 vollständig oberhalb eines Abgaskrümmers 25 angeordnet. Bei einem anderen Ausführungsbeispiel ist es möglich, dass der Abgasturbolader 5 im Wesentlichen oberhalb des Abgaskrümmers 25 angeordnet ist.

Der Partikelfilter und der SCR-Katalysator, mithin der Behälter 11, ist/sind im Wesentlichen unterhalb des Abgaskrümmers 25 und im Wesentlichen oberhalb eines Motorträgers 27 angeordnet, mit deren Hilfe der Motorblock 2 an einer Fahrzeugkarosserie befestigbar ist. Es ist möglich, dass der Partikelfilter und der SCR-Katalysator vollständig unterhalb des Abgaskrümmers 25 und/oder vollständig oberhalb des Motorträgers 27 angeordnet sind. Sie sind vorzugsweise annährend zentrisch relativ zu dem Abgasturbolader 5 angeordnet. Dies bedeutet, dass diese Elemente auf einer Strecke, welche sich von der Abtriebseite 15 zu der Schwingungsdämpferseite 19 erstreckt, im Wesentlichen an einer gleichen Position angeordnet sind.

Der Abgasturbolader 5 und der Oxidationskatalysator 7 sind durch eine Rohrleitung 29 miteinander verbunden. Diese verläuft im Wesentlichen in Längsrichtung des Motorblocks 2. Dabei beträgt eine Strömungslänge für das Abgas von einem Austritt des Abgasturboladers 5 bis zu einem Eintritt in den Oxidationskatalysator 7 bevorzugt weniger als 300 mm, besonders bevorzugt ungefähr 200 mm. Es ist so möglich, Druck- und/oder Temperaturverluste in dem Abgasstrom zwischen dem Abgasturbolader 5 und dem Oxidationskatalysator 7 zu minimieren.

Bevorzugt ist dem Oxidationskatalysator 7 eine hier nicht dargestellte Heiz-Katalysatorscheibe vorgeschaltet. Dieser kann damit rascher auf seine Betriebstemperatur gebracht werden, als dies ausschließlich aufgrund der Erwärmung durch den Abgasstrom möglich ist. Vorzugsweise umfasst die Heiz-Katalysatorscheibe selbst eine Katalysatorbeschichtung, wirkt also zusätzlich zu dem Oxidationskatalysator 7 als vorgeschalteter Katalysator. Der Oxidationskatalysator 7 und der Partikelfilter sind durch eine Rohrleitung 31 miteinander verbunden, welche eine Mischstrecke 33 umfasst. Entlang dieser ist die Zugabeeinrichtung 9 angeordnet. Vorzugsweise umfasst die Mischstrecke 33 eine Mischvorrichtung 35, die besonders bevorzugt als statische Mischvorrichtung ausgebildet ist. Bei einem Ausführungsbeispiel umfasst diese relativ zu der Rohrleitung 31 und dem Abgasstrom stillstehende Verteilungselemente, beispielsweise Schaufeln, um eine Verwirbelung des Abgasstroms und insbesondere eine innige Vermischung desselben mit der durch die Zugabeeinrichtung 9 zugegebenen Harnstoff-Wasser-Lösung zu bewirken. Es ist auch möglich, eine dynamische Mischvorrichtung 35 vorzusehen, die relativ zu dem Abgasrohr 33 und auch relativ zu dem Abgasstrom bewegte Elemente aufweist, um eine Durchmischung zu bewirken. Die durch die Zugabeeinrichtung 9 zugegebene Harnstoff-Wasser-Lösung ist hier durch einen Einspritzkegel 37 schematisch dargestellt.

Die Mischstrecke 33 sollte eine ausreichende Länge aufweisen, sodass die zugegebene Harnstoff-Wasser-Lösung zu Ammoniak und Kohlendioxid reagieren kann, bevor sie mit dem Abgasstrom gemeinsam in den Partikelfilter und/oder den SCR-Katalysator eintritt. Hierzu weist die Mischstrecke 33 bevorzugt eine Länge von 100 mm bis 300 mm auf, die von einer Position der Zugabeeinrichtung 9 bis zu einem Eintritt in den Partikelfilter beziehungsweise hier in den Behälter 11 gemessen wird.

Die Zugabeeinrichtung 9 ist bevorzugt möglichst nahe an dem Oxidationskatalysator 7 angeordnet, besonders bevorzugt in einem Abstand von 50 mm bis 100 mm von einem Austritt aus demselben gemessen.

Der Partikelfilter und der SCR-Katalysator sind bevorzugt in einem kurzen Abstand von wenigen Zentimetern, bevorzugt weniger als 25 mm, besonders bevorzugt ungefähr 15 mm, hintereinander angeordnet. Hierdurch können Wärmeverluste in dem Abgasstrom zwischen den beiden Komponenten gering gehalten werden. Eine nahe Anordnung ist besonders einfach möglich, wenn die Komponenten gemeinsam in dem Behälter 11 angeordnet sind. Ganz besonders bevorzugt weisen der Partikelfilter und der SCR-Katalysator gleiche Durchmesser beziehungsweise Querschnittsabmessungen auf, um Druckverluste in dem Abgasstrom möglichst gering zu halten. Vorzugsweise weisen beide Elemente einen Durchmesser von 7,5 Zoll auf. Auch der Oxidationskatalysator weist bevorzugt einen Durchmesser auf, welcher im Wesentlichen, besonders bevorzugt vollständig, dem Durchmesser des Partikelfilters und des SCR-Katalysators entspricht. Es ist möglich, dass der Oxidationskatalysator 7 einen Durchmesser von 6,2 Zoll aufweist, ebenso ist es möglich, dass er einen Durchmesser von 7,5 Zoll aufweist. Auch andere Durchmesser für die genannten Elemente sind möglich.

Der Partikelfilter weist vorzugsweise Eintrittskanäle und Austrittskanäle auf, wobei Wandungen der Eintrittkanäle und besonders bevorzugt auch Wandungen der Austrittkanäle eine SCR-Katalysatorbeschichtung aufweisen. Er ist somit als sogenannter SD-Partikelfilter ausgebildet. Es ist so möglich, dass der Partikelfilter die selektive katalytische Wirkung des SCR-Katalysators unterstützt.

Wie Figur 1 zeigt, sind die Komponenten des Abgassystems 3 so relativ zueinander angeordnet, dass der Abgasstrom von einem Austritt aus dem Abgasturbolader bis zu einem Austritt aus dem SCR-Katalysator beziehungsweise aus dem Behälter 11 eine Umlenkung um etwa 180° erfährt. Diese Anordnung wird bevorzugt, wenn eine relativ große Baulänge für das Abgassystem 3 zur Verfügung steht. Insbesondere wird diese Anordnung dann bevorzugt, wenn der Motorblock 2 längs in ein Fahrzeug eingebaut ist. Es ist allerdings auch möglich, die in Figur 1 gezeigte Anordnung bei einem Quereinbau des Motorblocks 2 zu realisieren, wenn genügend Baulänge zur Verfügung steht.

Der Abgasturbolader 5 ist bei dem dargestellten Ausführungsbeispiel näher an der Abtriebseite 15 als an der Schwingungsdämpferseite 19 angeordnet. Er ist dabei so orientiert, dass eine Turbinenseite 39 desselben zu der Schwingungsdämpferseite 19 hin ausgerichtet ist, während eine Verdichterseite 41 des zu der Abtriebseite 15 hin ausgerichtet ist. Der den Abgasturbolader 5 verlassende Abgasstrom strömt also zunächst in Richtung der Schwingungsdämpferseite 19.

Der Oxidationskatalysator 7 ist näher an der Schwingungsdämpferseite 19 als an der Abtriebseite 15 angeordnet. Dabei sind der Abgasturbolader 5 und der Oxidationskatalysator 7 relativ zueinander so angeordnet, dass der Abgasstrom von einem Austritt des Abgasturboladers 5 bis zu einem Eintritt in den Oxidationskatalysator 7 eine Umlenkung von im Wesentlichen 90° erfährt. Insbesondere wird der Oxidationskatalysator 7 bevorzugt von dem Abgas in einer Richtung durchströmt, die im Wesentlichen senkrecht auf der Längsrichtung des Motorblocks 2 und vorzugsweise zu dessen Unterseite 23 hin ausgerichtet ist. Vorzugsweise erfolgt die Umlenkung möglichst nahe an einem Eintritt in den Oxidationskatalysator 7. Es ist dann gewährleistet, dass die Rohrleitung 29 im Wesentlichen in Längsrichtung des Motorblocks 2 verläuft, weil die Umlenkung zum Oxidationskatalysator 7 erst nahe an dem Eintritt in denselben erfolgt.

Es ist möglich, dass der Abgasstrom von dem Abgasturbolader 5 zu dem Oxidationskatalysator 7 hin eine Umlenkung von zweimal im Wesentlichen 90° erfährt. Beispielsweise ist es möglich, dass der Oxidationskatalysator 7 - in Figur 1 - näher an einem Betrachter angeordnet ist als der Abgasturbolader 5. Der Abgasstrom kann dann in einer ersten 90°-Umlenkung zum Betrachter hin und in einer zweiten 90°-Umlenkung nach unten gelenkt werden. Selbstverständlich ist es ebenso möglich, dass der Oxidationskatalysator 7 weiter von einem Betrachter entfernt angeordnet ist als der Abgasturbolader 5. Auch in diesem Fall erfolgen die beiden 90°-Umlenkungen vorzugsweise nahe an dem Eintritt in den Oxidationskatalysator 7, sodass die Rohrleitung 29 im Wesentlichen in Längsrichtung des Motorblocks 2 verläuft.

Wird der Oxidationskatalysator 7 von dem Abgasstrom im Wesentlichen senkrecht und zur Unterseite 23 hin durchströmt, erfährt der Abgasstrom von einem Austritt aus dem Oxidationskatalysator 7, wo er im Wesentlichen senkrecht austritt, bis zu einem Eintritt in den Partikelfilter eine Umlenkung von im Wesentlichen 90°. Die Mischstrecke 33 verläuft dann vorzugsweise im Wesentlichen parallel zur Längsrichtung des Motorblocks 2.

Dementsprechend wird der Behälter 11, mithin der Partikelfilter und der SCR-Katalysator bei dem in Figur 1 dargestellten Ausführungsbeispiel, vorzugsweise im Wesentlichen in Längsrichtung des Motorblocks 2 durchströmt.

Die Trennstelle 13 ist vorzugsweise so ausgestaltet, dass der Abgasstrom eine Umlenkung von ungefähr 45° zur Unterseite 23 hin erfährt. Besonders bevorzugt ist die Trennstelle nahe an der Abtriebseite 15 des Motorblocks 2, insbesondere mit einem Abstand von 100 mm oder weniger als 100 mm angeordnet. Ganz besonders bevorzugt ist die Trennstelle 13 innerhalb eines Motorraums des Kraftfahrzeugs, also noch vor einer Aggregatetrennwand oder Stirnwand angeordnet, welche den Motorraum von einem Fahrgastraum abtrennt.

Aus Figur 1 wird deutlich, dass der Partikelfilter und der SCR-Katalysator, hier der Behälter 11, im Wesentlichen unterhalb des Abgasturboladers 5 und auch im Wesentlichen unterhalb des Oxidationskatalysators 7 angeordnet sind. Bei dem dargestellten Ausführungsbeispiel ist der Behälter 11 vollständig unterhalb des Abgasturboladers 5 und im Wesentlichen unterhalb des Oxidationskatalysators 7 angeordnet.

In Hinblick auf das Ausführungsbeispiel gemäß Figur 1 zeigt sich auch noch, dass der Behälter 11 beziehungsweise der Partikelfilter und der SCR-Katalysator bevorzugt von dem Abgasstrom in einer Richtung angeströmt werden, die relativ zu der Strömungsrichtung an dem Austritt aus dem Abgasturbolader 5 um ungefähr 180° umgelenkt ist.

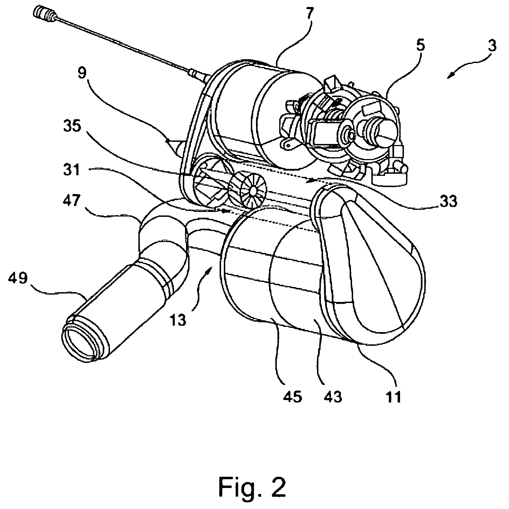

Figur 2 zeigt eine schematische Darstellung eines zweiten Ausführungsbeispiels für die Anordnung eines Abgassystems 3 an einem hier nicht dargestellten Motorblock 2. Gleiche und funktionsgleiche Elemente sind mit gleichen Bezugszeichen versehen, sodass insofern auf die vorangegangene Beschreibung verwiesen wird. Das hier dargestellte Ausführungsbeispiel ist bevorzugt dann vorgesehen, wenn eine Baulänge zur Verfügung steht, welche für die Anordnung gemäß Figur 1 nicht ausreicht. Dies kann insbesondere dann der Fall sein, wenn der Motorblock 2 quer in ein Kraftfahrzeug eingebaut wird.

Es zeigt sich nämlich, dass die Komponenten des Abgassystems 3 bei der Anordnung gemäß Figur 1 so relativ zueinander angeordnet sind, dass der Abgasstrom von einem Austritt aus dem Abgasturbolader 5 bis zu einem Austritt aus dem SCR-Katalysator im Wesentlichen eine Umlenkung um etwa 180° erfährt. Dies bedeutet, dass die Strömungsrichtung des Abgases am Austritt aus dem SCR-Katalysator relativ zu der Strömungsrichtung am Austritt aus dem Abgasturbolader 5 um etwa 180° geschwenkt orientiert ist. Bei dem Ausführungsbeispiel gemäß Figur 2 sind die Komponenten dagegen so relativ zueinander angeordnet, dass der Abgasstrom im Wesentlichen zwei Umlenkungen um etwa 180° erfährt. Damit ist die Strömungsrichtung des Abgases an einem Austritt aus dem SCR-Katalysator im Wesentlichen parallel orientiert zu der Strömungsrichtung am Austritt aus dem Abgasturbolader 5.

Während bei der Anordnung gemäß Figur 1 die Baulänge des Motorblocks 2 quasi zweifach für die Anordnung des Abgassystems 3 genutzt wird, wird sie bei dem Ausführungsbeispiel gemäß Figur 2 dreimal genutzt. Entsprechend ist die Anordnung des Abgassystems 3 bei dem Ausführungsbeispiel gemäß Figur 2 insgesamt schmaler.

Insbesondere ist der Abgasturbolader 5 bei dem Ausführungsbeispiel gemäß Figur 2 näher an der Schwingungsdämpferseite 19 des nicht dargestellten Motorblocks 2 als an dessen Abtriebseite 15 angeordnet. Der Oxidationskatalysator 7 ist näher an der Abtriebseite 15 als an der Schwingungsdämpferseite 19 angeordnet.

Der Oxidationskatalysator 7 ist so angeordnet, dass er etwa auf gleicher Höhe wie der Abgasturbolader 5 positioniert ist, wobei keine Umlenkung des Abgasstroms von dem Abgasturbolader 5 zu dem Oxidationskatalysator 7 hin gegeben ist. Insbesondere können so beide Komponenten sehr nahe aneinander angeordnet werden.

Der Oxidationskatalysator 7 ist relativ zu der Mischstrecke 33 so angeordnet, dass der Abgasstrom von einem Austritt aus demselben zu einem Eintritt in die Mischstrecke 33 eine Umlenkung von im Wesentlichen 180° erfährt. Zugleich ist die Mischstrecke 33 relativ zu dem hier dargestellten Partikelfilter 43 so angeordnet, dass der Abgasstrom von einem Austritt aus der Mischstrecke 33 bis zu einem Eintritt in diesen wiederum eine Umlenkung von im Wesentlichen 180° erfährt. Es ist auch möglich, diese Umlenkung der Mischstrecke 33 zuzuordnen, weil auch in ihr noch eine Durchmischung stattfindet. Wesentlich ist, dass im Bereich der Mischstrecke 33 zu dem Eintritt in den Partikelfilter 43 hin eine Umlenkung des Abgasstroms um im Wesentlichen 180° erfolgt.

Entsprechend zeigt sich, dass bei der Anordnung gemäß Figur 2 der Oxidationskatalysator 7 und der Partikelfilter 43 so relativ zueinander angeordnet sind, dass der Abgasstrom von dem Austritt aus dem Oxidationskatalysator 7 bis zu dem Eintritt in den Partikelfilter 43 eine Umlenkung von zweimal im Wesentlichen 180° erfährt.

Strömt also das Abgas von dem Austritt aus dem Abgasturbolader 5 durch den Oxidationskatalysator 7 in einer Richtung, die sich quasi von der Schwingungsdämpferseite 19 zu der Abtriebseite 15 erstreckt, durchströmt es die Mischstrecke 33 in der entgegengesetzten Richtung, nämlich von der Abtriebseite 15 zu der Schwingungsdämpferseite 19. Es wird dann wiederum umgelenkt, sodass der Partikelfilter 43 und der ebenfalls hier dargestellte SCR-Katalysator 45, mithin der Behälter 11, in einer Richtung durchströmt werden, die der Strömungsrichtung in der Mischstrecke 33 entgegengesetzt ist und vorzugsweise von der Schwingungsdämpferseite 19 zur Abtriebseite 15 hin orientiert ist. Insgesamt ist also die Strömungsrichtung durch den Partikelfilter 43 und den SCR-Katalysator 45 parallel zu der Strömungsrichtung durch den Oxidationskatalysator 7 ausgerichtet, während die Strömungsrichtung durch die Mischstrecke 33 entgegen dieser Strömungsrichtung orientiert ist.

Vorzugsweise ist das Abgassystem 3 in einem Kraftfahrzeug hinter dem Motorblock 2 angeordnet, wenn dieser quer eingebaut ist. Es ist dann insbesondere in einem Motorraum zwischen dem Motorblock 2 und einer Aggregatetrennwand zu dem Fahrgastraum angeordnet. Zeigt bei einem Quereinbau des Motorblocks 2 die Abtriebseite 15 - in Fahrtrichtung gesehen - nach rechts, verlaufen die eben beschriebenen Strömungsrichtungen vorzugsweise in Hinblick auf die Abtriebseite 15 und die Schwingungsdämpferseite 19 gesehen umgekehrt. Bei einem anderen Ausführungsbeispiel ist es allerdings auch möglich, nicht nur den Motorblock 2, sondern auch die Komponenten des Abgassystems 3 umgekehrt anzuordnen, sodass sich in Hinblick auf das Ausführungsbeispiel gemäß Figur 2 quasi eine gespiegelte Anordnung ergibt.

Im Bereich der Trennstelle 13 ist hier eine Rohrleitung 47 vorgesehen, welche bei einem Quereinbau des Motorblocks 2 die Strömungsrichtung des Abgasstroms zum Heck des Fahrzeugs hin umlenkt. Die Rohrleitung 47 umfasst ein Entkopplungselement 49.

Um einen Wärmeverlust in dem Abgassystem 3 weiter zu reduzieren, und um eine Temperaturbelastung des Fahrzeugeinbauraums zu verringern, wird das Abgassystem 3 vorzugsweise mit einer Feststoffisolierung versehen, beziehungsweise die Rohrleitungen 29, 31, 47 und bevorzugt auch die Komponenten des Abgassystems 3 werden durchgehend mit Wärmeisolation versehen, beispielsweise umwickelt oder luftspaltisoliert.

Insgesamt zeigt sich, dass die Motorblock-Anordnung 1 eine motornahe Anordnung aller Komponenten des Abgassystems 3 ermöglicht, wodurch insbesondere keine Temperaturverluste in dem Abgasstrom auftreten. Auch Druckverluste im Abgasstrom werden insbesondere durch kurze Wege in Verbindung mit großen Querschnitten, vorzugsweise einem Rohrleitungsquerschnitt von 80 mm, und einer Reduzierung der Eintritts- und Austrittsstellen in die verschiedenen Komponenten reduziert. Es ist möglich, die Abgassensorik motornah und optimal insbesondere in Hinblick auf eine Einbindung in einen Motorleitungssatz anzuordnen. Die Zugabeeinrichtung 9 kann auf einfache Weise über einen Motorkühlwasserkreislauf gekühlt werden. Insgesamt ist die Anordnung des Abgassystems 3 nicht mehr vom Fahrzeugtyp und von der Fahrzeugausprägung (Lenkungsvariante, Antriebsart) abhängig, sodass die Zahl möglicher Abgasanlagenvarianten verringert wird. Trotz der kompakten Anordnung des Abgassystems 3 steht eine hinreichend große Baulänge für die Mischstrecke 33 zwischen dem Oxidationskatalysator 7 und dem Partikelfilter 43 zur Verfügung, sodass eine effiziente Zugabe und Verteilung der Harnstoff-Wasser-Lösung möglich ist.

## Patentansprüche

1. Motorblock-Anordnung (1) mit einem Motorblock (2) und einem Abgassystem (3), wobei das Abgassystem (3) - in Strömungsrichtung eines Abgasstroms gesehen - hintereinander angeordnet einen Abgasturbolader (5), einen Oxidationskatalysator (7), eine Zugabeeinrichtung (9) für Harnstoff-Wasser-Lösung, einen Partikelfilter (43) und einen SCR-Katalysator (45) umfasst,
**dadurch gekennzeichnet, dass**
der Abgasturbolader (5), der Oxidationskatalysator (7), die Zugabeeinrichtung (9) für Harnstoff-Wasser-Lösung, der Partikelfilter (43) und der SCR-Katalysator (45) gemeinsam entlang einer Seite des Motorblocks (2) an demselben angeordnet sind, wobei die Seite im Wesentlichen senkrecht zu einer Abtriebseite (15) des Motorblocks (2) orientiert ist und der Abgasturbolader (5) im Wesentlichen oberhalb eines Abgaskrümmers (25) angeordnet ist.

2. Motorblock-Anordnung (1) nach Anspruch 1,
**dadurch gekennzeichnet, dass**
der Partikelfilter (43) und der SCR-Katalysator (45) gemeinsam in einem Behälter (11) angeordnet sind.

3. Motorblock-Anordnung (1) nach einem der vorhergehenden Ansprüche,
**dadurch gekennzeichnet, dass**
der Partikelfilter (43) Eintrittskanäle und Austrittskanäle aufweist, wobei zumindest die Wandungen der Eintrittskanäle eine SCR-Katalysatorbeschichtung aufweisen.

4. Motorblock-Anordnung (1) nach einem der vorhergehenden Ansprüche,
**dadurch gekennzeichnet, dass**
der Abgasturbolader (5), der Oxidationskatalysator (7), die Zugabeeinrichtung (9) für Harnstoff-Wasser-Lösung, der Partikelfilter (43) und der SCR-Katalysator (45) so relativ zueinander angeordnet sind, dass der Abgasstrom von einem Austritt aus dem Abgasturbolader (5) bis zu einem Austritt aus dem SCR-Katalysator (45) mindestens eine Umlenkung um etwa 180° erfährt.

5. Motorblock-Anordnung (1) nach einem der vorhergehenden Ansprüche,
**dadurch gekennzeichnet, dass**
der Abgasturbolader (5) und der Oxidationskatalysator (7) durch eine Rohrleitung (29) miteinander verbunden sind, welche im Wesentlichen in Längsrichtung des Motorblocks (2) verläuft, wobei eine Strömungslänge für das Abgas von einem Abgasturbolader-Austritt bis zu einem Oxidationskatalysator-Eintritt weniger als 300 mm, bevorzugt 200 mm beträgt.

6. Motorblock-Anordnung (1) nach einem der vorhergehenden Ansprüche,
**dadurch gekennzeichnet, dass**
der Oxidationskatalysator (7) und der Partikelfilter (43) durch eine Rohrleitung (31) miteinander verbunden und so relativ zueinander angeordnet sind, dass der Abgasstrom von einem Oxidationskatalysator-Austritt bis zu einem Partikelfilter-Eintritt eine Umlenkung von im Wesentlichen 90° oder von zweimal im Wesentlichen 180° erfährt.

7. Motorblock-Anordnung (1) nach einem der vorhergehenden Ansprüche,
**dadurch gekennzeichnet, dass**
die Rohrleitung (31) zwischen dem Oxidationskatalysator (7) und dem Partikelfilter (43) eine Mischstrecke (33) umfasst, entlang welcher die Zugabeeinrichtung (9) für Harnstoff-Wasser-Lösung angeordnet ist.

8. Motorblock-Anordnung (1) nach Anspruch 7,
**dadurch gekennzeichnet, dass**
die Mischstrecke (33) eine Mischvorrichtung (35) aufweist.

9. Motorblock-Anordnung (1) nach einem der vorhergehenden Ansprüche,
**dadurch gekennzeichnet, dass**
der Oxidationskatalysator (7) im Wesentlichen oberhalb des Abgaskrümmers (25) angeordnet ist.

10. Motorblock-Anordnung (1) nach einem der vorhergehenden Ansprüche,
**dadurch gekennzeichnet, dass**
der Partikelfilter (43) und der SCR-Katalysator (45) im Wesentlichen unterhalb des Abgaskrümmers (25) und zumindest im Wesentlichen oberhalb eines Motorträgers (27) angeordnet sind.

11. Motorblock-Anordnung (1) nach Anspruch 10,
**dadurch gekennzeichnet, dass**
der Partikelfilter (43) und der SCR-Katalysator (45) annährend zentrisch relativ zu dem Abgasturbolader (5) angeordnet sind.

12. Motorblock-Anordnung (1) nach einem der vorhergehenden Ansprüche,
**dadurch gekennzeichnet, dass**
der Abgasturbolader (5) näher an der Abtriebseite (15) des Motorblocks (2) als an einer der Abtriebseite (15) abgewandten Seite desselben angeordnet ist, wobei der Oxidationskatalysator (7) näher an der der Abtriebseite (15) abgewandten Seite als an der Abtriebseite (15) angeordnet ist.

13. Motorblock-Anordnung (1) nach einem der vorhergehenden Ansprüche,
**dadurch gekennzeichnet, dass**
der Abgasturbolader (5) und der Oxidationskatalysator (7) so relativ zueinander angeordnet sind, dass der Abgasstrom von einem Abgasturbolader-Austritt bis zu einem Oxidationskatalysator-Eintritt eine Umlenkung von im Wesentlichen 90° erfährt, wobei der Oxidationskatalysator (7) von dem Abgas in einer Richtung durchströmt wird, die im Wesentlichen senkrecht auf der Längsrichtung des Motorblocks (2) und zu einer Unterseite (23) desselben hin ausgerichtet ist.

14. Motorblock-Anordnung (1) nach einem der Ansprüche 1 bis 9,
**dadurch gekennzeichnet, dass**
der Abgasturbolader (5) näher an der der Abtriebseite (15) des Motorblocks (2) abgewandten Seite als an der Abtriebseite (15) angeordnet ist, wobei der Oxidationskatalysator (7) näher an der Abtriebseite (15) als an der der Abtriebseite (15) abgewandten Seite des Motorblocks (2) angeordnet ist.

15. Motorblock-Anordnung (1) nach einem der Ansprüche 1 bis 9 oder 12,
**dadurch gekennzeichnet, dass**
der Oxidationskatalysator (7) relativ zu der Mischstrecke (33) und die Mischstrecke (33) relativ zu dem Partikelfilter (43) so angeordnet sind, dass der Abgasstrom von einem Oxidationskatalysatoraustritt zu einem Eintritt in die Mischstrecke (33) eine Umlenkung von im Wesentlichen 180° erfährt, wobei er von einem Austritt aus der Mischstrecke (33) bis zu einem Eintritt in den Partikelfilter (43) eine Umlenkung von im Wesentlichen 180° erfährt.

16. Motorblock-Anordnung (1) nach einem der vorhergehenden Ansprüche,
**dadurch gekennzeichnet, dass**
der Partikelfilter (43) und der SCR-Katalysator (45) im Wesentlichen unterhalb des Abgasturboladers (5) und auch im Wesentlichen unterhalb des Oxidationskatalysators (7) angeordnet sind.

## Claims

1. Cylinder block arrangement (1) having a cylinder block (2) and an exhaust gas system (3), wherein the exhaust gas system (3) comprises a turbocharger (5), an oxidation catalyst (7), a feed device (9) for urea / water solution, a particle filter (43), and an SCR catalyst (45), arranged one behind the other when seen in the flow direction of an exhaust gas flow,
**characterised in that**
the turbocharger (5), the oxidation catalyst (7), the feed device (9) for urea / water solution, the particle filter (43) and the SCR catalyst (45) are arranged together along a side of the cylinder block (2) on said cylinder block (2), wherein the side is orientated substantially perpendicular to an output side (15) of the cylinder block (2) and the turbocharger (5) is arranged substantially above an exhaust manifold (25).

2. Cylinder block arrangement (1) according to claim 1,
**characterised in that**
the particle filter (43) and the SCR catalyst (45) are arranged together in a receptacle (11).

3. Cylinder block arrangement (1) according to one of the preceding claims,
**characterised in that**
the particle filter (43) has inlet ducts and outlet ducts, wherein at least the walls of the inlet ducts have an SCR catalyst coating.

4. Cylinder block arrangement (1) according to one of the preceding claims,
**characterised in that**
the turbocharger (5), the oxidation catalyst (7), the feed device (9) for urea / water solution, the particle filter (43) and the SCR catalyst are arranged relative to each other so that the exhaust gas flow from an outlet from the turbocharger (5) as far as an outlet from the SCR catalyst (45) is deflected at least once by approximately 180°.

5. Cylinder block arrangement (1) according to one of the preceding claims,
**characterised in that**
the turbocharger (5) and the oxidation catalyst (7) are connected to each other by a pipe (29), which extends substantially in the longitudinal direction of the cylinder block (2), wherein a flow length for the exhaust gas from a turbocharger outlet to an oxidation catalyst inlet is less than 300 mm, preferably 200 mm.

6. Cylinder block arrangement (1) according to one of the preceding claims,
**characterised in that**
the oxidation catalyst (7) and the particle filter (43) are connected to each other by a pipe (31) and are arranged relative to each other so that the exhaust gas flow from an oxidation catalyst outlet to a particle filter inlet is deflected by substantially 90° or is deflected twice by substantially 180°.

7. Cylinder block arrangement (1) according to one of the preceding claims,
**characterised in that**
the pipe (31) comprises, between the oxidation catalyst (7) and the particle filter (43), a mixing section (33), along which the feed device (9) for urea / water solution is arranged.

8. Cylinder block arrangement (1) according to one of the preceding claims,
**characterised in that**
the mixing section (33) has a mixing device (35).

9. Cylinder block arrangement (1) according to one of the preceding claims,
**characterised in that**
the oxidation catalyst (7) is arranged substantially above the exhaust manifold (25).

10. Cylinder block arrangement (1) according to one of the preceding claims,
**characterised in that**
the particle filter (43) and the SCR catalyst (45) are arranged substantially below the exhaust manifold (25) and at least substantially above an engine cradle (27).

11. Cylinder block arrangement (1) according to claim 10,
**characterised in that**
the particle filter (43) and the SCR catalyst (45) are arranged approximately centrally relative to the turbocharger (5).

12. Cylinder block arrangement (1) according to one of the preceding claims,
**characterised in that**
the turbocharger (5) is arranged closer to the output side (15) of the cylinder block (2) than to a side thereof facing away from the output side (15), wherein the oxidation catalyst (7) is arranged closer to the side facing away from the output side (15) than to the output side (15).

13. Cylinder block arrangement (1) according to one of the preceding claims,
**characterised in that**
the turbocharger (5) and the oxidation catalyst (7) are arranged relative to each other so that the exhaust gas flow from a turbocharger outlet to an oxidation catalyst inlet is deflected by substantially 90°, wherein the exhaust gas flows through the oxidation catalyst (7) in a direction which is orientated substantially perpendicular with respect to the longitudinal direction of the cylinder block (2) and towards a lower side (23) thereof.

14. Cylinder block arrangement (1) according to one of claims 1 to 9,
**characterised in that**
the turbocharger (5) is arranged closer to the side facing away from the output side (15) of the cylinder block (2) than to the output side (15), wherein the oxidation catalyst (7) is arranged closer to the output side (15) than to the side of the cylinder block (2) facing away from the output side (15).

15. Cylinder block arrangement (1) according to one of claims 1 to 9 or 12,
**characterised in that**
the oxidation catalyst (7) is arranged relative to the mixing section (33) and the mixing section (33) is arranged relative to the particle filter (43) so that the exhaust gas flow from an oxidation catalyst outlet to an inlet into the mixing section (33) is deflected by substantially 180°, wherein it is deflected by substantially 180° from an outlet of the mixing section (33) to an inlet into the particle filter (43).

16. Cylinder block arrangement (1) according to one of the preceding claims,
**characterised in that**
the particle filter (43) and the SCR catalyst (45) are arranged substantially below the turbocharger (5) and also substantially below the oxidation catalyst (7).

## Revendications

1. Agencement de bloc moteur (1) comprenant un bloc moteur (2) et un système d'échappement (3), le système d'échappement (3) - observé dans un sens d'écoulement d'un flux d'échappement - comprenant un turbocompresseur (5) des gaz d'échappement, un catalyseur à oxydation (7), un dispositif d'alimentation (9) en solution eau/urée, un filtre à particules (43) et un système de réduction catalytique sélective (45) disposés l'un derrière l'autre, **caractérisé en ce que** le turbocompresseur des gaz d'échappement (5), le catalyseur à oxydation (7), le dispositif d'alimentation (9) en solution eau/urée, le filtre à particules (43) et le système de réduction catalytique sélective (45) conjointement le long d'un côté du bloc moteur (2) sont disposés sur le même côté, le côté étant orienté essentiellement perpendiculaire à un côté sortie (15) du bloc moteur (2) et le turbocompresseur (5) des gaz d'échappement étant disposé sensiblement à l'extérieur d'un collecteur (25) de gaz d'échappement.

2. Agencement de bloc moteur (1) selon la revendication 1, **caractérisé en ce que** le filtre à particules (43) et le système à réduction catalytique sélective (45) sont réunis dans un boîtier commun (11).

3. Agencement de bloc moteur (1) selon l'une quelconque des revendications précédentes, **caractérisé en ce que** le filtre à particules (43) présente des canaux d'admission et des canaux de sortie, au moins les parois des canaux d'admission présentant un revêtement de catalyseur à réduction catalytique sélective.

4. Agencement de bloc moteur (1) selon l'une quelconque des revendications précédentes, **caractérisé en ce que** le turbocompresseur (5) de gaz d'échappement, le catalyseur à oxydation (7), le dispositif d'alimentation (9) en solution eau/urée, le filtre à particules (43) et le catalyseur de réduction catalytique sélective (45) sont disposés les uns par rapport aux autres de sorte que le flux des gaz d'échappement provenant d'une sortie du turbocompresseur (5) de gaz d'échappement jusqu'à une sortie du catalyseur à réducteur catalytique sélective (45) connaît au moins une déviation d'environ 180 °.

5. Agencement de bloc moteur (1) selon l'une quelconque des revendications précédentes, **caractérisé en ce que** le turbocompresseur (5) de gaz d'échappement et le catalyseur à oxydation (7) sont reliés ensemble au moyen d'une conduite (29) qui s'étend sensiblement dans le sens de la longueur du bloc moteur (2), une longueur d'écoulement pour le gaz d'échappement provenant d'une sortie de turbocompresseur jusqu'à une entrée de catalyseur à oxydation étant inférieure à 300 mm, de préférence étant de 200 mm.

6. Agencement de bloc moteur (1) selon l'une quelconque des revendications précédentes, **caractérisé en ce que** le catalyseur à oxydation (7) et le filtre à particules (43) sont reliés ensemble au moyen d'une conduite (31) et sont disposés l'un par rapport à l'autre de sorte que le flux de gaz d'échappement provenant d'une sortie du catalyseur à oxydation jusqu'à une entrée de filtre à particules connaisse une déviation de sensiblement 90° ou deux fois sensiblement 180°.

7. Agencement de bloc moteur (1) selon l'une quelconque des revendications précédentes, **caractérisé en ce que** la conduite (31) entre le catalyseur à oxydation (7) et le filtre à particules (43) comprend une section de mélange (33), le long de laquelle est disposé le dispositif d'alimentation (9) en solution eau/urée.

8. Agencement de bloc moteur (1) selon la revendication 7, **caractérisé en ce que** la section de mélange (33) présente un mélangeur (35).

9. Agencement de bloc moteur (1) selon l'une quelconque des revendications précédentes, **caractérisé en ce que** le catalyseur à oxydation (7) est disposé sensiblement au-dessus du collecteur (25) de gaz d'échappement.

10. Agencement de bloc moteur (1) selon une quelconque des revendications précédentes, **caractérisé en ce que** le filtre à particules (43) et le catalyseur à réduction catalytique sélective (45) sont disposés sensiblement sous le collecteur (25) de gaz d'échappement et au moins sensiblement au-dessus d'un support (27) de moteur.

11. Agencement de bloc moteur (1) selon la revendication 10, **caractérisé en ce que** le filtre à particules (43) et le système à réduction catalytique sélective (45) sont disposés approximativement de manière centrale par rapport au turbocompresseur (5) de gaz d'échappement.

12. Agencement de bloc moteur (1) selon l'une quelconque des revendications précédentes, **caractérisé en ce que** le turbocompresseur (5) de gaz d'échappement est disposé plus proche sur le côté sortie (15) du bloc moteur (2) que sur son côté en regard du côté sortie (15), le catalyseur à oxydation (7) étant disposé plus proche sur le côté en regard du côté de sortie (15) que sur le côté de sortie (15).

13. Agencement de bloc moteur (1) selon l'une quelconque des revendications précédentes, **caractérisé en ce que** le turbocompresseur (5) de gaz d'échappement et le catalyseur à oxydation (7) sont disposés l'un par rapport à l'autre de sorte que le flux de gaz d'échappement provenant d'une sortie du turbocompresseur de gaz d'échappement jusqu'à une entrée du catalyseur à oxydation connaisse une déviation de sensiblement 90°, le catalyseur à oxydation (7) étant traversé par le gaz d'échappement dans un sens qui est aligné sensiblement perpendiculaire au sens de la longueur du bloc moteur (2) et à son côté inférieur (23).

14. Agencement de bloc moteur (1) selon l'une quelconque des revendications 1 à 9, **caractérisé en ce que** le turbocompresseur (5) est disposé plus proche sur le côté en regard du côté sortie (15) du bloc moteur (2) que sur le côté sortie (15), le catalyseur à oxydation (7) étant disposé plus proche sur le côté sortie (15) que sur le côté en regard du côté sortie (15) du bloc moteur (2).

15. Agencement de bloc moteur (1) selon l'une quelconque des revendications 1 à 9 ou 12, **caractérisé en ce que** le catalyseur à oxydation (7) est disposé par rapport à la section de mélange (33) et la section de mélange (33) par rapport au filtre à particules (43) de telle sorte que le flux de gaz d'échappement provenant d'une sortie du catalyseur à oxydation vers une entrée dans la section de mélange (33) connaisse une déviation de sensiblement 180 °, ledit écoulement de gaz d'échappement à partir d'une sortie provenant de la section de mélange (33) jusqu'à une entrée dans le filtre à particules (43) connaissant une déviation de sensiblement 180 °.

16. Agencement de bloc moteur (1) selon l'une quelconque des revendications précédentes, **caractérisé en ce que** le filtre à particules (43) et le système à réduction catalytique sélective (45) sont disposés sensiblement sous le turbocompresseur (5) de gaz d'échappement et également sensiblement sous le catalyseur à oxydation (7).
